Europäisches Patentamt

European Patent Office

Office européen des brevets

(11) Veröffentlichungsnummer: **0 147 884**
A2

## (12) EUROPÄISCHE PATENTANMELDUNG

(21) Anmeldenummer: 84201814.5

(22) Anmeldetag: 06.12.84

(51) Int. Cl.⁴: **C 01 B 31/36**
C 01 B 33/02

(30) Priorität: 23.12.83 DE 3346870

(43) Veröffentlichungstag der Anmeldung:
10.07.85 Patentblatt 85/28

(84) Benannte Vertragsstaaten:
BE DE LU NL

(71) Anmelder: METALLGESELLSCHAFT AG
Reuterweg 14 Postfach 3724
D-6000 Frankfurt/M.1(DE)

(72) Erfinder: Rammler, Roland, Dr.-Ing.
Taubenweg 8
D-6240 Königsten (Ts)(DE)

(72) Erfinder: Dreher, Ingo, Dr.-Ing.
Im Rosengärtchen 62
D-6370 Oberursel(DE)

(72) Erfinder: Sauter, Dieter, Dr. phil.
Am Jungfernborn 25
D-6369 Nidderau 5(DE)

(72) Erfinder: Bussmann, Alfons, Dr. rer. nat.
Chemnitzer Strasse 6
D-6369 Nidderau 2(DE)

(74) Vertreter: Fischer, Ernst, Dr.
c/o Metallgesellschaft AG Reuterweg 14
D-6000 Frankfurt am Main 1(DE)

(54) Verfahren zum Erzeugen koksummantelter Quarzkörner.

(57) Die Quarzkörner werden in einer Crackzone in rieselnder oder wirblender Bewegung gehalten, während man unter Zugabe von Kohlenwasserstoffen bei Temperaturen von etwa 400 bis 800°C Crackreaktionen bewirkt und dabei eine Koksummantelung der Quarzkörner erzielt. Vor der Crackzone kann man die Quarzkörner in einer Vorwärmzone auf Temperaturen von etwa 100 bis 800°C erhitzen.

Die koksummantelten Quarzkörner können zu Siliziumcarbid (SiC) oder Silizium weiterverarbeitet werden.

F i g.1

METALLGESELLSCHAFT AG          -1-          **0147884**

Nr. 9021 LÖ

Verfahren zum Erzeugen koksummantelter Quarzkörner

Die Erfindung betrifft ein Verfahren zum Ummanteln von Quarzkörnern mit Koks, wobei man die Quarzkörner in einer Crackzone in rieselnder oder wirbelnder Bewegung hält und unter
Zugabe von Kohlenwasserstoffen bei Temperaturen von etwa 400
bis 800°C Crackreaktionen und eine Koksummantelung der Quarzkörner erzielt.

Ein Verfahren dieser Art ist in der DE-PS 30 23 297 beschrieben.
Hierbei ist die Crackzone als Wirbelbett ausgebildet, aus der
ein Teil der koksummantelten Quarzkörner einer Verbrennungszone
zugeführt wird, wo die Quarzkörner durch teilweises Abbrennen
des Koksbelags erhitzt und als Wärmeträger zurück in die Crackzone geleitet werden. Das erzeugte Produkt dient der Herstellung
von Silizium oder auch Siliziumcarbid (SiC), ein widerstandsfähiges, hartes Material, das vielseitige Verwendung findet.
U.a. wird Siliziumcarbid in der Schleifmittelindustrie und als
feuerfestes Material verwendet, Silizium wird in der Halbleitertechnik benötigt.

Der Erfindung liegt die Aufgabe zugrunde, die Herstellung koksummantelter Quarzkörner auf möglichst einfache und energetisch
günstige Weise durchzuführen. Beim eingangs genannten Verfahren
geschieht dies erfindungsgemäß dadurch, daß man die in der Crackzone benötigte Wärme durch Zufuhr von Verbrennungsluft und
Verbrennung in der Crackzone selbst erzeugt. Hierbei verbrennt
ein Teil der in die Crackzone eingeführten Kohlenwasserstoffe
und liefert die für die Crackreaktionen notwendige Energie, ohne
daß man einen Teil des ummantelten Produkts außerhalb der Crackzone als Wärmeträger aufarbeiten müßte. Um den unerwünschten
Abbrand des Koksmantels der Quarzkörner möglichst weitgehend zu

2

unterdrücken, sieht eine Ausführungsform der Erfindung vor, gasförmigen oder flüssigen Brennstoff so in die Crackzone einzubringen, daß die Verbrennungsluft bevorzugt mit diesem reagiert.

Es ist zweckmäßig, die Crackzone als Wirbelbett ohne oder mit Rost zu gestalten. Zu bevorzugen ist es, einen Rost mit zahlreichen Düsen zur Erzeugung eines Brennstoff-Luft-Gemisches und einer Verbrennung im Düsenbereich auszubilden. Ein hierfür geeignetes Wirbelbett ist in den deutschen Patentschriften 1 758 244 und 2 061 829 beschrieben. Alternativ kann die Crackzone als Rieselkolonne oder Drehrohr ausgestaltet sein.

Um in der Crackzone möglichst wenig Wärme zu benötigen, ist es vorteilhaft, die Quarzkörner zunächst in einer Vorwärmzone zu erhitzen und mit Temperaturen von etwa 100 bis 700$^{\circ}$C in die Crackzone zu leiten. In der Vorwärmzone ist direkte Wärmeübertragung von heißem Verbrennungsgas auf den Sand zu bevorzugen. Besondere Kostenersparnis ist zu erzielen, wenn dort mit Innenverbrennung gearbeitet wird. Für die Vorwärmzone kann zweckmäßigerweise ein Wirbelbett oder auch ein Drehrohr, eine Rieselkolonne, eine pneumatische Förderstrecke oder ein oder mehrere Wärmeaustauschzyklone verwendet werden. Hierbei bringt man die Quarzkörner in direkten Kontakt mit heißen Gasen, die man durch Verbrennen von Brennstoff innerhalb oder außerhalb der Vorwärmzone erzeugt hat. Hierbei ist es auch möglich, als Brennstoff Abgas der Crackzone zu verwenden, da es brennbare Crackgase und höhere Kohlenwasserstoffe (Öldämpfe) enthält und einen entsprechenden Heizwert besitzt.

Es bietet sich an, das Abgas der Vorwärmzone zum Erwärmen der Verbrennungsluft der Vorwärmzone und/oder der Crackzone zu verwenden. Die Verwertung von Abwärme kann ferner durch Vorwärmen der Kohlenwasserstoffe geschehen, ehe man sie in die Crackzone leitet. Als Kohlenwasserstoffe für die Crackzone kommen insbesondere schwere Erdölfraktionen, Teer oder Teerpech in Frage, bevorzugt werden Einsatzöle mit hohen Gehalten an Conradson-Rückstand.

3

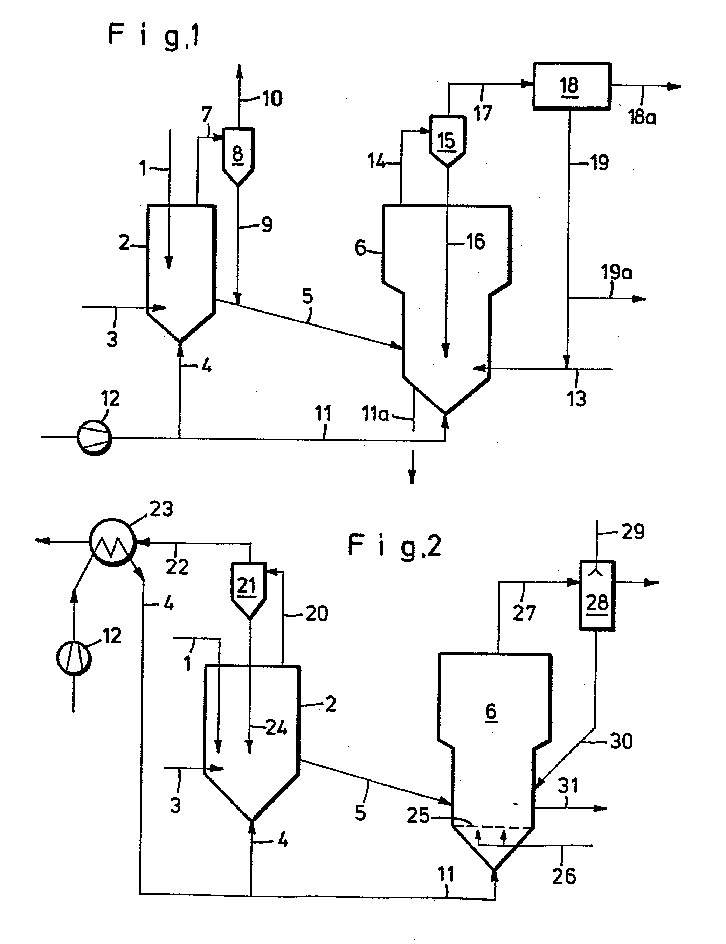

Die Zeichnung zeigt zwei Ausführungsmöglichkeiten des erfindungsgemäßen Verfahrens. Im Verfahren der Fig. 1 leitet man die
Quarzkörner durch die Leitung 1 in eine Vorwärmzone 2, die als
Wirbelbett ausgebildet ist. Bei den Quarzkörnern handelt es
sich üblicherweise um besonders reinen Quarzsand mit Korngrößen
bis etwa 0,5 mm. Durch die Leitung 3 wird flüssiger oder gasförmiger Brennstoff der Vorwärmzone 2 zugeführt. Verbrennungsluft, die gleichzeitig auch als Fluidisierungsgas dient, kommt
aus der Leitung 4. Die Verbrennung erfolgt entweder in einer
vorgeschalteten Brennkammer (nicht dargestellt) oder im Innern
der Vorwärmzone 2. Dabei wird der Quarzsand üblicherweise auf
Temperaturen im Bereich von 100 bis 400°C erhitzt und durch
die Leitung 5 der Crackzone 6 zugeführt. Das Abgas der Vorwärmzone 2 strömt durch die Leitung 7 zu einem Abscheidezyklon 8;
Feststoffe verlassen den Zyklon 8 durch die Leitung 9 und werden
den Feststoffen der Leitung 5 zugemischt, das Abgas strömt in
der Leitung 10 ab.

Die Crackzone 6 ist ebenfalls als Wirbelbett ausgebildet, der
man Luft als Verbrennungs- und Fluidisierungsgas durch die
Leitung 11 zuführt. Die Luft wird durch das Gebläse 12 angesaugt. Kohlenwasserstoffe gibt man der Crackzone 6 durch die
Leitung 13 auf, sie liefern einerseits den Brennstoff, um die
Temperatur in der Crackzone auf 400 bis 800°C zu halten, andererseits den Kohlenstoff, um die Quarzkörner mit einer Koksschicht zu ummanteln. Das Wirbelbett der Crackzone 6 kann mit
oder ohne Rost ausgestaltet sein. Koksummantelte Quarzkörner
werden durch die Produktabzugsleitung 11a abgeführt.

Die Abgase der Crackzone 6 strömen in der Leitung 14 zu einem
Zyklon 15, von dem aus die abgeschiedenen Feststoffe durch die
Leitung 16 in die Crackzone 6 zurückgeführt werden. Die weitgehend feststofffreien Abgase gelangen in der Leitung 17 zu
einer Kondensationseinrichtung 18, in welcher kohlenwasserstoffreiche Dämpfe verflüssigt und abgeschieden werden, vorzugsweise in zwei oder drei Stufen. Die Kohlenwasserstoffe gibt

4

**0147884**

man ganz oder teilweise in der Leitung 19 den Kohlenwasserstoffen der Leitung 13 zu, ein Überschuß kann durch die Leitung 19a abgeführt werden. Das Crackgas strömt durch die
Leitung 18 a ab.

Die Verfahrensvariante der Fig. 2 weist ebenfalls wie Fig. 1
eine Zufuhrleitung 1 für Quarzsand, die Vorwärmzone 2, die
Brennstoffzufuhrleitung 3, die Leitungen 4 und 11 für Fluidi-
sierungs- und Verbrennungsluft, die Crackzone 6 und das
Gebläse 12 zum Ansaugen von Luft auf.

Das Abgas der Vorwärmzone 2 wird in der Leitung 20 zunächst zu
einem Entstaubungszyklon 21 und dann in der Leitung 22 zu einem
Wärmeaustauscher 23 geführt. Der Wärmeaustauscher 23 dient dazu,
die vom Gebläse 12 angesaugte Luft vorzuwärmen. Im Zyklon 21
abgeschiedene Feststoffe fließen in der Leitung 24 zurück in
die Vorwärmzone 2.

Die vorgewärmten Quarzkörner werden durch die Leitung 5 zur
Crackzone 6 geführt, deren Aufgabe bereits zusammen mit Fig. 1
erläutert wurde. Die Crackzone ist als Wirbelbett ausgestaltet,
das einen Rost 25 aufweist. Diesem Rost wird durch die Leitung 26
gasförmiger Brennstoff zugeführt, der vor oder im Rost in
zahlreichen Einzelströme aufgeteilt wird, die mit Luftströmen
vermischt werden, was in der Zeichnung nicht näher dargestellt
ist. Der Rost kann zahlreiche Düsen aufweisen, wie es z.B. in
der DE-PS 17 58 244 beschrieben ist. Diesen Düsen wird durch
ein Innenrohr Brennstoff und durch ein dazu konzentrisches
äußeres Rohr Verbrennungsluft zugeführt, wobei Brennstoff und
Luft im Mündungsbereich der Düsen gemischt und entzündet werden.
Die so erzeugten Verbrennungsgase wirken als Fluidisierungsgas
und liefern gleichzeitig die Wärme, welche zum Erhitzen der
Einsatzstoffe auf Reaktortemperaturen und für die endothermen
Crackreaktionen erforderlich ist. Das Produkt, koksummantelte
Quarzkörner, wird in der Leitung 31 abgezogen.

Die die Crackzone 6 verlassenden Abgase strömen in der Leitung 27
zu einer Waschzone 28, der man durch die Leitung 29 flüssige
Kohlenwasserstoffe zuführt. Diese Kohlenwasserstoffe werden
in der Waschzone 28 versprüht, wobei sie die Abgase kühlen und
kohlenwasserstoffreiches Kondensat mit sich führen. Die durch
den Kontakt mit dem Abgsa erwärmten Kohlenwasserstoffe fließen
in der Leitung 30 zur Crackzone 6. Der Waschzone 28 können
weitere Kühl- und Kondensationsstufen folgen.

.Beispiel:

In eine Anlage, welche nach dem Verfahrensschema gemäß Fig. 1
arbeitet, werden stündlich 10 t sauberer Quarzsand der Körnung
0,2 - 0,5 mm eingeleitet. Dieser Sand wird in einer als Wirbelbett ausgestalteten Vorwärmzone 2 unter Einsatz von 90 kg/h
Erdgas und 1800 kg/h Verbrennungsluft auf 400°C erhitzt. Dabei
entstehen 1900 kg/h Abgas, dessen fühlbare Wärme gegebenenfalls
zum Vorwärmen der Prozeßluft und/oder des Einsatzöls verwendet
werden kann, in der Anlage aber ungenutzt bleibt.

Herzustellen ist ein koksummantelter Sand mit 37 - 38 Gew.%
Kohlenstoffgehalt zum Weiterverarbeiten auf Siliziumcarbid.
Dazu werden 16 t/h Vakuumdestillations-Rückstand aus der Aufarbeitung von Erdöl mit einem Gehalt an Conradson-Kohlenstoff
von 40 Gew.% dem Krackreaktor 6 aufgegeben. Der Reaktor 6 wird
bei einer Temperatur von 600°C betrieben. Mit dem Destillationsrückstand werden 14 000 kg/h Verbrennungsluft in den Reaktor 6
eingeleitet, die mit einem Teil des Öls, der entstehenden
flüchtigen Krackprodukte (Öldämpfe, Gas) und auch einem geringen Teil des Krackkohlenstoffs auf den Sandkörnern reagiert
und 16 600 kg/h Abgas bildet. Dieses strömt gemeinsam mit
7400 kg/h Kracköl aus dem Reaktor in einen Zyklonentstauber 15
und wird danach in einer Kühl- und Kondensationseinrichtung 18
behandelt. Der Wirbelbettreaktor 2 zum Vorwärmen des Quarzsandes
und der Wirbelbettreaktor 6 zur Erzeugung des Produkts sind
mit Düsenrosten gemäß DE-PS 17 58 244 ausgestattet.Das in den
Düsen gezündete Gemisch aus Luft und Gas strömt zur weiteren
Verbrennung in den Wirbelraum des jeweiligen Reaktors. Der Wirbelraum des Vorwärmreaktors 2 hat einen Innendurchmesser von 1,5 m und eine Höhe von 1 m. Über dem Wirbelraum befindet sich eine Beruhigungszone mit einem Durchmesser von 2,2 m und einer Höhe von 2 m. Der Wirbelraum des Crackreaktors 2 hat einen Durchmesser von 5 m und eine Höhe von 4 m. Darüber schließt sich der erweiterte Beruhigungsraum mit 7 m Durchmesser und einer Höhe von 4 m an.

7

Patentansprüche

1. Verfahren zum Ummanteln von Quarzkörnern mit Koks, wobei man die Quarzkörner in einer Crackzone in rieselnder oder wirbelnder Bewegung hält und unter Zugabe von Kohlenwasserstoffen bei Temperaturen von etwa 400 bis 800$^{\circ}$C Crackreaktionen und eine Koksummantelung der Quarzkörner erzielt, dadurch gekennzeichnet, daß man die in der Crackzone benötigte Wärme durch Zufuhr von Verbrennungsluft und Verbrennung in der Crackzone selbst erzeugt.

2. Verfahren nach Anspruch 1, dadurch gekennzeichnet, daß die Crackzone als Wirbelbett mit zahlreichen Düsen zur Erzeugung eines Brennstoff-Luft-Gemisches und einer Verbrennung im Düsenbereich ausgebildet ist.

3. Verfahren nach Anspruch 1 oder 2, dadurch gekennzeichnet, daß man die Quarzkörner zunächst in einer Vorwärmzone auf Temperaturen von etwa 100 bis 800$^{\circ}$C erhitzt, bevor sie in die Crackzone geleitet werden.

4. Verfahren nach Anspruch 3, dadurch gekennzeichnet, daß für die Vorwärmzone ein Wirbelbett, ein Drehrohr, eine Rieselkolonne, eine pneumatische Förderstrecke oder mindestens ein Wärmeaustausch-Zyklon verwendet wird.

5. Verfahren nach Anspruch 3 oder 4, dadurch gekennzeichnet, daß man der Vorwärmzone Brennstoff und Verbrennungsluft zuführt.

6. Verfahren nach Anspruch 5, dadurch gekennzeichnet, daß zum Erhitzen der Quarzkörner in der Vorwärmzone Abgas der Crackzone verwendet wird.

7. Verfahren nach Anspruch 6, dadurch gekennzeichnet, daß man Abgas der Vorwärmzone zum Erwärmen der Verbrennungsluft der Vorwärmzone und/oder der Crackzone verwendet.

8. Verfahren nach Anspruch 1 oder einem der folgenden, dadurch gekennzeichnet, daß man als Kohlenwasserstoffe schwere Erdölfraktionen, Teer oder Teerpech verwendet.

9. Verfahren nach Anspruch 1 oder 8, dadurch gekennzeichnet, daß man die Kohlenwasserstoffe vorgewärmt in die Crackzone leitet.

Fig.1

Fig.2